# EUROPEAN PATENT SPECIFICATION

(11) **EP 2 825 763 B1**
(45) Date of publication and mention of the grant of the patent: **11.01.2017**
(21) Application number: 13711149.8
(22) Date of filing: 12.03.2013
(51) Int. Cl.: F02M 35/10, F02M 35/024, F02C 7/055, F04B 39/16, F02M 35/02

(54) **SCREEN PANEL FOR COVERING AT LEAST PARTLY AN AIR INTAKE OPENING OF AN AIR INLET HOUSE OF A COMBUSTION ENGINE OR A COMPRESSOR**
ABSCHIRMUNGSTAFEL ZUR ZUMINDEST TEILWEISEN ABDECKUNG EINER LUFTEINLASSÖFFNUNG EINES LUFTEINLASSGEHÄUSES EINER BRENNKRAFTMASCHINE ODER EINES VERDICHTERS
PANNEAU-ÉCRAN DESTINÉ À RECOUVRIR AU MOINS PARTIELLEMENT UNE OUVERTURE D'ADMISSION D'AIR D'UN BOÎTIER D'ENTRÉE D'AIR D'UN MOTEUR À COMBUSTION OU D'UN COMPRESSEUR

(30) Priority: 15.03.2012 NL 2008494
(43) Date of publication of application: 21.01.2015
(73) Proprietor: Global Power Netherlands B.V., 6412 BH Heerlen (NL)
(72) Inventor: MARSCHALL, Werner, Karl, Hans, D-28355 Bremen (DE); WILLEMS, Frank, D-52222 Stolberg (DE)
(74) Representative: Algemeen Octrooi- en Merkenbureau B.V.
(86) International application number: PCT/NL2013/050160
(87) International publication number: WO 2013/137723

(56) References cited:
- US-A- 3 203 158
- US-A- 5 147 430
- US-A- 5 683 479
- US-A1- 2008 257 160
- US-A1- 2009 038 880
- US-A1- 2011 219 768
- US-B1- 6 203 592

## Description

The invention relates to a screen panel according to the preamble of claim 1.

In the prior art (see for example US 5147430 or US 3.203.158) bird screen or insect screen panels are known to be used in combination with frames to cover air intake openings of an air inlet house comprising filters for filtering the air to be provided to a combustion engine or a compressor. Such a combustion engine is preferably a high performance combustion turbine, which requires filtered, clean and if possible temperature conditioned and compressed air for achieving a high efficiency combustion for generating for example electrical power and useful heat (Combined Heat and Power, CHP). By means of such a screen panel it is prevented that materials such as birds, feathers, insects, parts of plants, etcetera are sucked into the air inlet house. These materials affect the operation of the filters for cleaning to air to be fed to the engine in the air inlet house adversely.

A problem of the known screen panels is that the grids are difficult to be installed and/or removed from the frame during e.g. replacement. In addition, the sharp edges of the metal grid, may injure operators during installation and/or removal of a screen panel.

It is therefore an object of the present invention to provide a screen panel that can be installed in a quick, safe and efficient manner.

This object is achieved by means of a screen panel as is specified in claim 1, more in particular with the features mentioned in the characterizing part of claim 1.

By embedding at least a part of a circumferential edge of the metal grid in an elastic layer, it is possible for an operator without the risk of getting injured, to clamp the elastic layer into the frame for connecting the metal grid with the frame. In this manner a quick, safe and efficient installation of the screen panel is realized. The same applies for removing the screen panel.

The metal grid is provided with a first set of preferably parallel extending and preferably evenly spaced bars and a second set of preferably parallel extending and preferably evenly spaced bars, wherein the bars of the first set include an angle with the bars of the second set. The bars of the first set are preferably woven with the bars of the second set. Preferably, the metal grid is made of austenite. The diameter of the bars is preferably as small as possible, such that the incoming air flow encounters a minimum resistance. On the other hand the diameter of the bars needs to have a minimum dimension to provide sufficient rigidity and/or strength to the grid. By embedding at least a circumferential part of the edge of the metal grid in an elastic layer the rigidity of the complete metal grid is increased, in particular if the metal grid is clamped into the frame. Due to this increased rigidity it is possible that the diameter of the bars is further reduced compared to metal grids having no edges embedded in elastic layer(s). These bars having a reduced diameter provide less resistance to the incoming air flow, i.e. provide less turbulence, which increases the efficiency of the filters in the air inlet house and the efficiency of the combustion turbine.

In this specification, if the circumferential edge of the grid or a part thereof is embedded in the elastic layer, it is meant that the outermost edge of the grid seen from the centre of the grid, is covered with the elastic layer, i.e. does not protrude in an outward direction (seen from the centre of the grid) with regard to the elastic layer.

By using an elastic layer, preferably a strip-like elastic layer, for the grid, it is possible to clamp this strip-like elastic layer of the grid firmly in the frame in such a manner that the grid in use of the combustion engine, is substantially vibration free connected to the frame. This reduces noise, but more important reduces wear of the grid increasing the overall durability of the screen panel.

Preferably, the entire circumferential edge of the metal grid is embedded with the elastic layer. In this manner all advantages mentioned above are applicable and as the elastic layer(s) including the entire circumferential edge of the metal grid is (are) clamped into the frame, the metal grid is even better connected thereto.

In a further aspect of the screen panel according to the present invention, the width of the elastic layer is provided by the distance between two opposing and substantially parallel extending edges of the elastic layer, wherein the width of the elastic layer is maximally 1/10 of the shortest distance between centre of the grid and the circumferential edge of the grid.

The elastic layer is preferably strip-shaped, wherein the strip-shaped elastic layer comprises two opposing longitudinal and parallel extending edges, wherein the distance between these edges corresponds to the width of the elastic layer. On the one hand the width is preferably as short as possible, as no air is able to pass through the elastic layer, on the other hand a certain width depending on the dimensions of the grid needs to be present as otherwise the rigidity of the grid is not increased and/or the grid can not be firmly enough clamped into the frame. It is possible that only parts of an edge are embedded in spaced apart elastic layer parts. For example it is possible that one circumferential edge of a rectangular shaped metal grid, comprises several spaced apart elastic layer parts. For increasing rigidity to the grid it is advantageous as the complete edge of a rectangular shaped metal grid is embedded in one strip-like elastic layer.

The elastic layer is made from plastic, preferably PVC. By making the elastic layer from plastic the metal grid is galvanic isolated from the frame, as the metal grid is connected to the frame only by means of the plastic elastic layer. In this way if the frame is made of metal, additional galvanic isolators may be omitted.

Although the screen panel may have any shape such as for example circular, the most preferred shape used for screen panels is rectangular. A rectangular shape of the screen panel, including a square shaped screen panel, is convenient for transport and easy to handle during installation of the panel screen.

The frame of the screen panel according to the present invention comprises a U-profile and/or a H-profile, wherein the distance between ends of two opposing legs of the U-profile or the H-profile substantially corresponds with the thickness of the elastic layer. Preferably, the frame is made from a flexible material such that the elastic layer can be placed between flexible spreading legs of the U-profile or the H-profile for clamping the elastic layer between these legs. The frame can be connected to the edges of an air intake opening directly for example by screws or by means of a sub-frame.

For a rectangular screen panel only two opposing circumferential edges of the metal grid need to be embedded, partly or substantially complete, in elastic layers for securing the metal grid to the frame by clamping force, wherein two opposing frame parts of the frame for clamping the elastic layers of the metal grid are made preferably from aluminium. Aluminium is remarkable for its flexibility and for its ability to resist corrosion. If all circumferential edges of the rectangular metal grid are provided with an elastic layer, it may be cost-effective that the other two opposing frame parts of the frame for clamping the elastic layer are made from plastic.

The invention will now be explained in more detail with reference to an exemplary embodiment shown in the appended figures, in which:
Figure 1 shows a perspective view of a part of an air inlet house of a combustion turbine,
Figure 2 shows a front view of a number of screen panels according to the present invention covering an air intake opening of the air inlet house shown in figure 1,
Figures 3a, 3b 3c show different views of a grid of a screen panel according to the invention.
Figures 4a and 4b show a section of part of a screen panel according to the invention, respectively a part of a frame of a screen panel according to the invention.

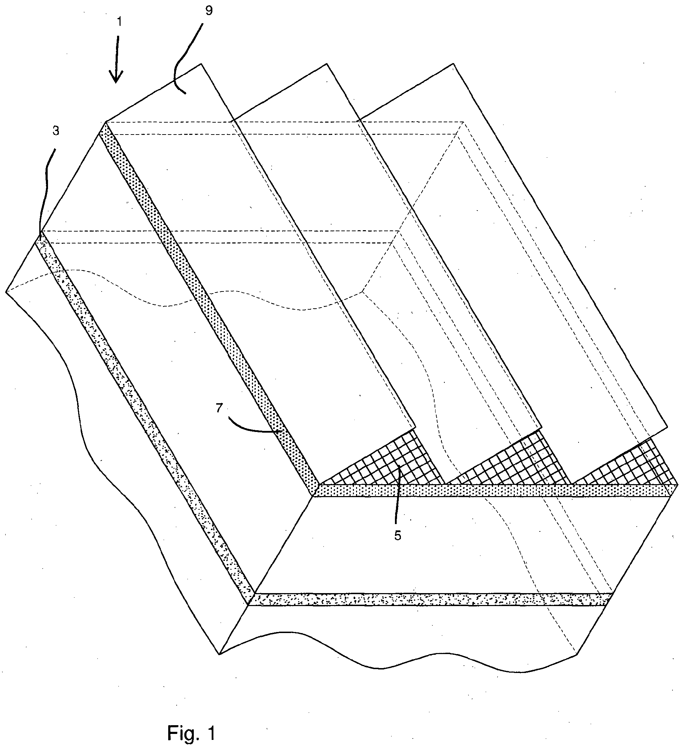

Like parts are indicated by the same numerals in the various figures. Figure 1 shows an air inlet house 1 of an combustion engine (not shown) comprising filters 3, of which only one has been shown in figure 1. Atmospheric air is sucked into the air inlet house through a relatively large air intake opening 5, which has been covered entirely by a number of rectangular screen panels 7. The air inlet house 1 further comprises plates 9 forming an acute angle with the plane defined by the screen panels 7. By means of these plates 9 air is fed into the air inlet house 1 in a preferred direction.

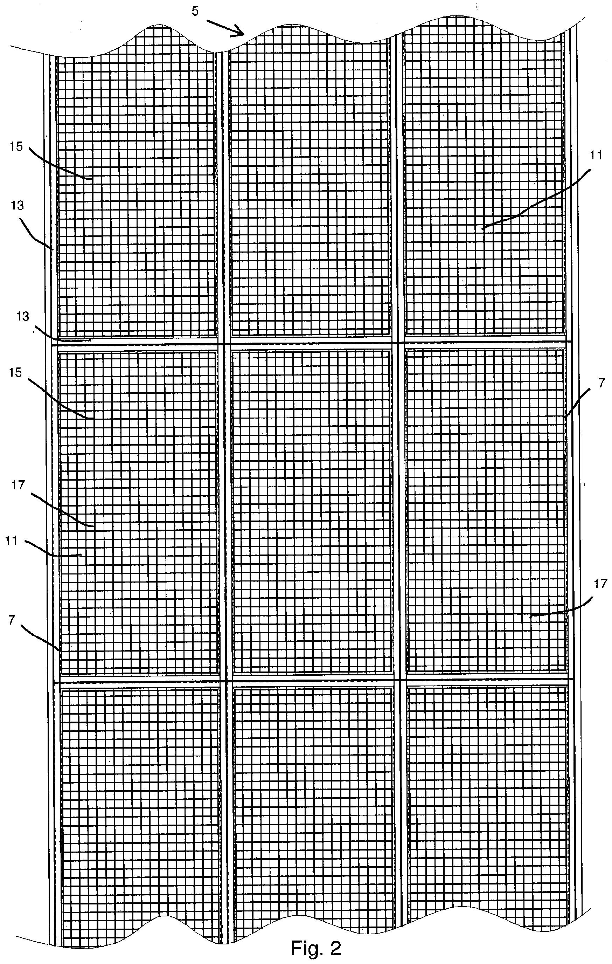

Figure 2 shows a front view without the plates 9 of the screen panels 7 covering the relatively large air intake opening 5 of the inlet house 1. Each screen panel 7 comprises a metal grid 11, and a frame 13 connected to the edges (not visible) of the air intake opening 5.

The metal grid 11 is provided with a first set of parallel vertical extending and evenly spaced bars 15 and a second set of horizontal parallel extending and evenly spaced bars 17. The bars of the first set are preferably woven with the bars of the second set. Preferably, the metal grid is made of austenite.

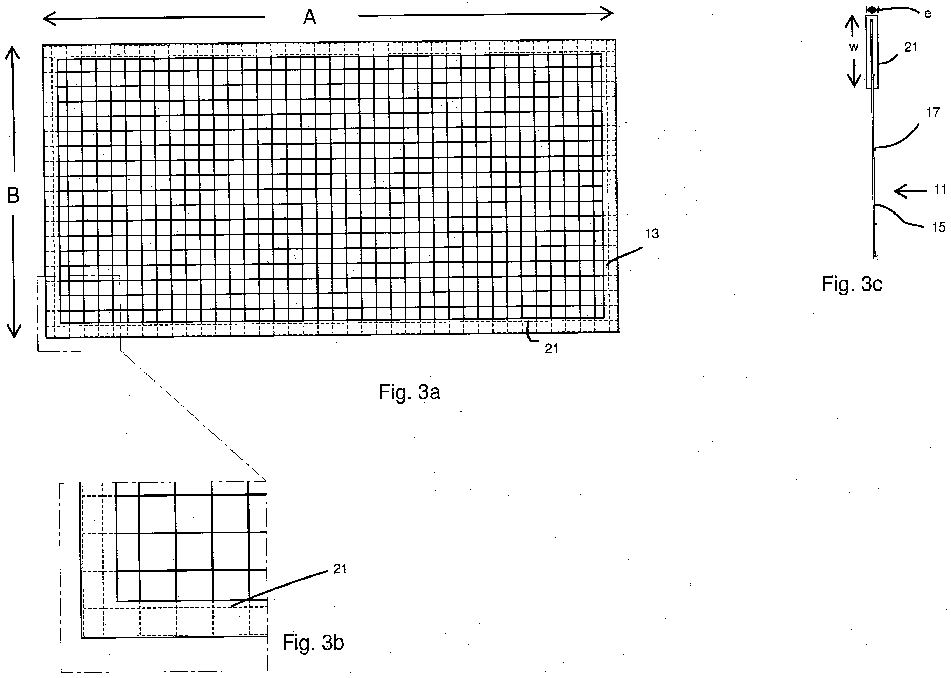

As shown in figures 2, 3a-c and 4a, 4b at least a part of a circumferential edge of the metal grid 11 is embedded in an elastic layer 21 (in figures 2, 3a and 3b the elastic layer is partly indicated with a dotted line as the frame 13 is covering the elastic layer and the circumferential edge of the metal grid 11). Figure 3c shows a section of the metal grid 11 comprising vertical 15 and horizontal extending bars 15, 17, wherein the circumferential edge of the metal grid 11 is embedded in an elastic layer 21.

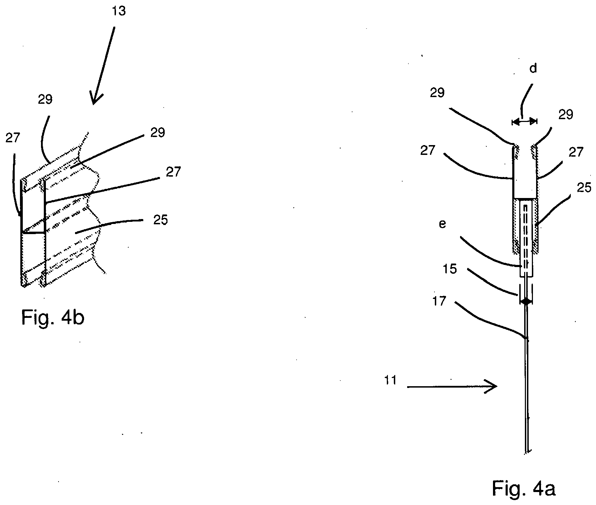

The frame 13, as shown in detail in figures 4a, 4b, is an H-profile 25, wherein the smallest distance d between ends of two opposing legs 27 of the H-profile 25 substantially corresponds with the thickness e of the elastic layer 21. The ends 29 of the legs 27 are folded. The elastic layer 21 can easily be placed between the ends 29 and the flexible spreading legs 27 of the H-profile 25 for clamping the elastic layer 21 between these legs 27 and securing the metal grid 11 to the frame 13. Preferably, the frame is made from aluminium. It is also possible to make the frame from plastic.

The circumferential edge of the metal grid 11 and the elastic layer 21 are integrated with each other, i.e. are one-piece connected with each other. No parts of the circumferential edge of the metal grid 11 protrude from the elastic layer 21 in an outward direction seen from the centre of the metal grid 11. The elastic layer is made from plastic, preferably PVC or PU.

In the exemplary embodiment shown in the drawings the entire circumferential edge of the metal grid 11 is enclosed with the elastic layer 21, such that the complete edge of the metal grid is formed by the elastic layer. It is also possible that only parts (not shown) of the circumferential edge of the metal grid 11 are provided with the elastic layer 21 for clamping the metal grid 11 to the frame 13. The elastic layer may comprise several spaced apart elastic layer parts (not shown) positioned on one circumferential edge of the grid. Further, it is possible that a circumferential edge of the grid is not completely embedded (not shown) in an elastic strip-like layer, but only partly, for example for only 50 % or more.

The distance A between two vertical opposing edges of the metal grid 11 is about 1 meter, wherein the distance B between two horizontal opposing edges of the metal grid 11 is about 0,5 meter. The screen panel 7 is used as a bird screen panel, wherein the mesh width of the metal gird 11 is approximately 25 millimetres. It is also possible to use instead of a bird screen panel or in addition, an insect screen panel (not shown), wherein the metal grid of the insect screen panel has a maximum mesh width of 5 millimetres.

The thickness e of the elastic layer 21 is approximately 10 mm, whereas the width w of the elastic layer 21 should be preferably corresponding to at least one mesh width. In the exemplary embodiment shown in the figures the width w of the elastic layer 21 is approximately 50 mm.

## Claims

1. A screen panel (7) for at least partly covering an air intake opening (5) of an air inlet house (1) of a combustion engine or a compressor, which air inlet house (1) has at least one filter for filtering the air to be supplied to the combustion engine or the compressor, wherein the screen panel (7) comprises:
- at least a frame (13) to be connected to the air inlet house (1)
- at least a metal grid (11) to be connected with the frame (13) for at least partly covering the air intake opening (5) of the air inlet house (1) **characterized in that,** at least a part of a circumferential edge of the metal grid (11) is embedded in an elastic layer (21) wherein the elastic layer (21) can be clamped into the frame (13) for connecting the metal grid (11) with the frame (13).

2. A screen panel (7) according to claim 1, wherein the entire circumferential edge of the metal grid (11) is embedded with the elastic layer (21).

3. A screen panel (7) according to claim 1 or 2, wherein the width of the elastic layer (21) is provided by the distance between two opposing and substantially parallel extending edges of the elastic layer (21) wherein the width of the elastic layer (21) is maximally 1/10 of the shortest distance between centre of the grid (11) and the circumferential edge of the grid (4).

4. A screen panel (7) according to claim 1 or 3, wherein the screen panel (7) has a rectangular shape, wherein at least two opposing circumferential edges of the metal grid (11) are at least partly embedded in elastic layers (21).

5. A screen panel (7) according to any of the preceding claims, wherein the frame (13) comprises a U-profile and/or a H-profile (25) wherein the elastic layer (21) can be clamped between two opposing flexible legs of the U-profile or the H-profile (25).

6. A screen panels (7) according to claims any of the preceding claims 1 and/or 3-5, wherein the at least one circumferential edge is partly embedded by several spaced apart elastic layer parts.

7. A screen panel (7) according to any of the preceding claims 1, 3-5,
wherein the at least one circumferential edge is at least partly embedded in one strip-like elastic layer.

8. A screen panel (7) according to any of the preceding claims, wherein
the elastic layer is made from plastic, preferably polyvinyl chloride (PVC) or polyurethane (PU).

9. A screen panel (7) according to any of the preceding claims, wherein
the minimum distance between two opposing circumferential edges of the grid (11) is 40 cm (0,4 meter).

10. A screen panel (7) according to any of the preceding claims, wherein
the screen panel (7) is a bird screen panel, wherein the metal grid (11) of the bird screen panel has a minimum mesh width of 20 millimetres.

11. A screen panel (7) according to any of the preceding claims 1-9,
wherein the screen panel (7) is an insect screen panel, wherein the metal grid (11) of the insect screen panel has a maximum mesh width of 5 millimetres.

12. An air inlet house of a combustion engine or a compressor having at least one air intake opening comprising a screen panel (7) according to at least one of the preceding claims.

## Patentansprüche

1. Abschirmungstafel (7) zur zumindest teilweisen Abdeckung einer Lufteintrittsöffnung (5) eines Lufteinlassgehäuses (1) einer Brennkraftmaschine oder eines Verdichters, wobei das Lufteinlassgehäuse (1) mindestens einen Filter zum Filtern der Luft hat, die der Brennkraftmaschine oder dem Verdichter zugeführt werden soll, wobei die Abschirmungstafel (7) Folgendes umfasst:
- wenigstens einen Rahmen (13), der mit dem Lufteinlassgehäuse (1) verbunden werden soll,
- wenigstens ein Metallgitter (11), das zur zumindest teilweisen Abdeckung der Lufteintrittsöffnung (5) des Lufteinlassgehäuses (1) mit dem Rahmen (13) zu verbinden ist,
**dadurch gekennzeichnet, dass** zumindest ein Teil eines umlaufenden Randes des Metallgitters (11) in einer elastischen Schicht (21) eingebettet ist, wobei die elastische Schicht (21) in den Rahmen (13) zur Verbindung des Metallgitters (11) mit dem Rahmen (13) geklemmt werden kann.

2. Abschirmungstafel (7) nach Anspruch 1, wobei der gesamte umlaufende Rand des Metallgitters (11) mit der elastischen Schicht (21) eingebettet ist.

3. Abschirmungstafel (7) nach Anspruch 1 oder 2, wobei die Breite der elastischen Schicht (21) durch den Abstand zwischen zwei entgegengesetzten und sich im Wesentlichen parallel erstreckenden Rändern der elastischen Schicht (21) gegeben ist, wobei die Breite der elastischen Schicht (21) maximal 1/10 des kürzesten Abstands zwischen der Mitte des Gitters (11) und dem umlaufenden Rand des Gitters (11) beträgt.

4. Abschirmungstafel (7) nach Anspruch 1 oder 3, wobei die Abschirmungstafel (7) eine rechteckige Form hat, wobei mindestens zwei entgegengesetzte umlaufende Ränder des Metallgitters (11) zumindest teilweise in elastische Schichten (21) eingebettet sind.

5. Abschirmungstafel (7) nach einem der vorhergehenden Ansprüche, wobei der Rahmen (13) ein U-Profil und/oder ein H-Profil (25) aufweist, wobei die elastische Schicht (21) zwischen zwei entgegengesetzten flexiblen Schenkeln des U-Profils oder des H-Profils (25) geklemmt sein kann.

6. Abschirmungstafel (7) nach einem der vorhergehenden Ansprüche 1 und/oder 3-5, wobei der mindestens eine umlaufende Rand teilweise durch mehrere voneinander beabstandete elastische Schichtteile eingebettet ist.

7. Abschirmungstafel (7) nach einem der vorhergehenden Ansprüche 1, 3-5, wobei der mindestens eine umlaufende Rand zumindest teilweise in eine streifenähnliche elastische Schicht eingebettet ist.

8. Abschirmungstafel (7) nach einem der vorhergehenden Ansprüche, wobei die elastische Schicht aus Kunststoff, vorzugsweise Polyvinylchlorid (PVC) oder Polyurethan (PU), besteht.

9. Abschirmungstafel (7) nach einem der vorhergehenden Ansprüche, wobei der Mindestabstand zwischen zwei entgegengesetzten umlaufenden Rändern des Gitters (11) 40 cm (0,4 Meter) beträgt.

10. Abschirmungstafel (7) nach einem der vorhergehenden Ansprüche, wobei die Abschirmungstafel (7) eine Vogelabschirmungstafel ist, wobei das Metallgitter (11) der Vogelabschirmungstafel eine Mindestmaschenweite von 20 Millimetern hat.

11. Abschirmungstafel (7) nach einem der vorhergehenden Ansprüche 1-9, wobei die Abschirmungstafel (7) eine Insektenabschirmungstafel ist, wobei das Metallgitter (11) der Insektenabschirmungstafel eine Höchstmaschenweite von 5 Millimetern hat.

12. Lufteinlassgehäuse einer Brennkraftmaschine oder eines Verdichters, das mindestens eine Lufteintrittsöffnung hat, die eine Abschirmungstafel (7) nach mindestens einem der vorhergehenden Ansprüche umfasst.

## Revendications

1. Panneau-écran (7) pour couvrir au moins partiellement une ouverture d'admission d'air (5) d'un boîtier d'entrée d'air (1) d'un moteur à combustion ou d'un compresseur, lequel boîtier d'entrée d'air (1) a au moins un filtre pour filtrer l'air devant être alimenté au moteur à combustion ou au compresseur, dans lequel le panneau-écran (7) comprend :
- au moins un cadre (13) devant être relié au boîtier d'entrée d'air (1),
- au moins une grille métallique (11) devant être reliée au cadre (13) pour couvrir au moins partiellement l'ouverture d'admission d'air (5) du boîtier d'entrée d'air (1), **caractérisé en ce qu'**au moins une partie d'un bord circonférentiel de la grille métallique (11) est insérée dans une couche élastique (21) où la couche élastique (21) peut être serrée dans le cadre (13) pour relier la grille métallique (11) au cadre (13).

2. Panneau-écran (7) selon la revendication 1, dans lequel l'ensemble du bord circonférentiel de la grille métallique (11) est inséré dans la couche élastique.

3. Panneau-écran (7) selon la revendication 1 ou 2, dans lequel la largeur de la couche élastique (21) est fournie par la distance entre deux bords de la couche élastique (21) opposés et s'étendant sensiblement parallèlement, où la largeur de la couche élastique (21) est au maximum égale au 1/10 de la distance la plus courte entre le centre de la grille (11) et le bord circonférentiel de la grille (11).

4. Panneau-écran (7) selon la revendication 1 ou 3, dans lequel le panneau-écran (7) a une forme rectangulaire, où au moins deux bords circonférentiels opposés de la grille métallique (11) sont au moins partiellement insérés dans des couches élastiques (21).

5. Panneau-écran (7) selon l'une des revendications précédentes, dans lequel le cadre (13) comprend un profilé en U et/ou un profilé en H (25), où la couche élastique (21) peut être serrée entre deux branches souples opposées du profilé en U ou du profilé en H (25).

6. Panneau-écran (7) selon l'une des revendications précédentes 1 et/ou 3 à 5, dans lequel l'au moins un bord circonférentiel est partiellement inséré dans plusieurs parties de couches élastiques espacées.

7. Panneau-écran (7) selon l'une des revendications précédentes 1, 3 à 5, dans lequel l'au moins un bord circonférentiel est au moins partiellement inséré dans une couche élastique en forme de bande.

8. Panneau-écran (7) selon l'une des revendications précédentes, dans lequel la couche élastique est réalisée à partir de matière plastique, de préférence de polychlorure de vinyle (PVC) ou de polyuréthane (PU).

9. Panneau-écran (7) selon l'une des revendications précédentes, dans lequel la distance minimale entre deux bords circonférentiels opposés de la grille (11) est de 40 cm (0,4 mètre).

10. Panneau-écran (7) selon l'une des revendications précédentes, dans lequel le panneau-écran (7) est un panneau-écran contre les oiseaux, où la grille métallique (11) du panneau-écran contre les oiseaux a une largeur minimale de maille de 20 millimètres.

11. Panneau-écran (7) selon l'une des revendications précédentes 1 à 9, dans lequel le panneau-écran (7) est un panneau-écran contre les insectes, où la grille métallique (11) du panneau-écran contre les insectes a une largeur maximale de maille de 5 millimètres.

12. Boîtier d'entrée d'air d'un moteur à combustion ou d'un compresseur ayant au moins une ouverture d'admission d'air comprenant un panneau-écran (7) selon au moins l'une des revendications précédentes.
